# EUROPÄISCHE PATENTSCHRIFT

(11) **EP 1 067 033 B1**
(45) Veröffentlichungstag und Bekanntmachung des Hinweises auf die Patenterteilung: **06.10.2004**
(21) Anmeldenummer: 00114033.4
(22) Anmeldetag: 05.07.2000
(51) Int. Cl.: B60T 15/52

(54) **Verfahren zum Lösen der Bremsen eines Druckluftbremssystems mittels eines Füllstosses**
Brake release method of a compressed air braking system by means of a pressure surge
Procédé de désserrage de frein d'un système de freinage à air comprimé au moyen d'un choc de pression

(30) Priorität: 06.07.1999 DE 19931163
(43) Veröffentlichungstag der Anmeldung: 10.01.2001
(73) Patentinhaber: KNORR-BREMSE Systeme für Schienenfahrzeuge GmbH, 80809 München (DE)
(72) Erfinder: Schlosser, Walter, 86163 Augsburg (DE); Schwarz, Dieter, 85232 Bergkirchen (DE); Weissflog, Manfred, 81827 München (DE)

(56) Entgegenhaltungen:
- DE-A- 3 505 898
- DE-A- 19 854 952
- DE-B- 1 149 736

## Beschreibung

Die Erfindung betrifft ein Verfahren zum Lösen der Bremsen eines Druckluftbremssystems, insbesondere bei Eisenbahnfahrzeugen nach UIC-Standard und angelehnten Standards mit Hilfe eines der Hauptluftleitung zugeführten Füllstoßes, wobei der Druckverlauf zum Abbau des Füllstoßes einen Druckabfall mit wenigstens einem vorgegebenen Druckgradienten in einem vorbestimmten ersten Zeitintervall umfasst, sowie einer Vorrichtung zur Durchführung des Verfahrens.

Druckluftbremssysteme von Schienenfahrzeugen werden gemäß dem Stand der Technik, wie beispielsweise in "Bremsen für Schienenfahrzeuge", Handbuch - Bremstechnische Begriffe und Werte -, Knorr-Bremse AG, München, 1990 ausführlich beschrieben, durch Betätigung des Führerbremsventiles vom Triebfahrzeug eines Zuges aus beeinflußt. Bei den Druckluftbremssystemen unterscheidet man gemäß obigem Handbuch zwischen
- selbsttätigen und
- nicht selbsttätigen
Systemen.

Die selbsttätige Bremse ist dadurch gekennzeichnet, daß ein Druckabfall in der Hauptluft- bzw. Bremsleitung die Bremsung automatisch bewirkt. Eine stufenweise Druckreduzierung führt bei einer derartigen Bremse zur stufenweisen Erhöhung der Bremskraft. Nach UIC liegt der Betriebsbremsbereich zwischen 4,6 und 3,5 bar, wobei in der Hauptluftleitung bei gelöster Bremse ein Regelbetriebsdruck von 5 bar vorliegt.

Bei mehrlösigen Bremsen dieses Typs erfolgt ein Lösen der Bremse nur in dem Maβe, in dem der Druck in der Hauptluftleitung erhöht wird. Es besteht somit eine feste Beziehung zwischen den Drücken in der Hauptluftleitung, dem Steuerbehälter bzw. dem Steuerraum und dem Bremszylinder.

Um bei indirekten Bremssystemen das Befüllen der Hauptluftleitung zum Lösen der Bremsen, also den Lösevorgang zu beschleunigen, wird ein sogenannter Füllstoß in die Hauptluftleitung eingeleitet, d.h. in Füllstellung des Führerbremsventils Druckluft aus dem Hauptluftbehälter über die Führerbremsventileinrichtung direkt in die Hauptluft- bzw. Bremsleitung eingespeist. Ein derartiger Füllstoß führt zu einem schnellen Druckanstieg in der Hauptluftleitung und damit zu kurzen Lösezeiten der Bremsen.

Aus der DE 40 13 278 ist eine adaptive Bremssteuerung bekanntgeworden, die eine Einrichtung umfaßt, um beim Lösen der Bremse den Vorsteuerdruck für ein schnelles Lösen der Bremse durch Einleiten eines Füllstoßes zu erreichen.

Der nächstkommendste Stand der Technik in Form der DE 35 05 898 zeigt ein Führerbremsventil, das zum Lösen der Bremse eine selbsttätige Füllstoßfunktion umfasst, wobei die Dauer der Füllstöße auf die Lösestufe und der Zuglänge abgestimmt ist. Der Füllstoß gemäß der DE 35 05 898 würde nur beim Wechsel des Führerbremsventils von einer Bremsstellung in eine Fahrstellung eingeleitet, wobei die Dauer des Füllstoßes abhängig von der Bremsstellung gewählt würde. Ein Einleiten eines Füllstoßes bei einem Wechsel des Führerbremsventiles aus einer Bremsstellung in eine eigene Füllstoßstellung des Führerbremsventiles ist in der DE 35 05 898 nicht beschrieben. Die Füllstoßstellung des Führerbremsventiles ermöglicht dem Lokführer das schnelle Lösen der Bremse durch manuellen Eingriff beispielsweise nach einer Zwangsbremsung.

Die Länge eines in der Füllstoßstellung eingeleiteten Füllstoßes war bislang durch die Länge des Zuges bestimmt. Generell galt, daß je länger der Zug, desto länger die Füllstoßzeit.

Das Führerbremsventil gemäß der DE 35 05 898 umfasst desweiteren ein Querschnittwechselventil um während des Füllstoßes eine Nachspeisung aus der HB-Leitung über einen schaltbaren größeren Querschnitt zu ermöglichen.

Die Rückumschaltung des Querschnittwechsels auf den kleineren Querschnitt erfolgte druckabhängig. Dies führt zu langen Lösezeiten.

DE 198 54 952 A1 zeigt eine elektropneumatische Bremssteuerungsvorrichtung und ein Verfahren zum Druckaufbauen in einer Bremsleitung eines Zuges zum Bremsauslösen des Zuges unter Verwendung der Bremssteuervorrichtung. Dabei wird zunächst die Bremsleitung mit einem Überdruck beaufschlagt, dieser Überdruck wird für ein festes Zeitintervall gehalten, und anschließend wird die Bremsleitung entlüftet, bis ein Lösebremsdruck erreicht wird. Die Füllrate der Bremsleitung beim Einstellen des Überdruckes und die Entlüftungsrate zum Einstellen des Lösedruckes sind abhängig von dem Druck, welcher zuvor beim Bremsen in der Bremsleitung vorlag bzw. von dem Druck, welcher sich beim Befüllen bzw. Entlüften in der Bremsleitung einstellt. Der Bremsleitungsdruck ist jedoch von der Zuglänge und damit dem Gesamtvolumen der Bremsleistung abhängig.

Aufgabe der vorliegenden Erfindung ist es daher, ein Verfahren und eine Vorrichtung zum Lösen einer Druckluftbremse eines Druckluftbremssystems in Schienenfahrzeugen, unter Zuhilfenahme eines Füllstoßes in der Füllstoßstellung der Führerbremseinreichtung anzugeben, mit dem die zuvor aufgezeigten Nachteile vermieden werden und mit dem eine optimale Lösezeitverkürzung erreicht wird.

Des weiteren soll ein und dieselbe Füllstoßfunktion unabhängig von der Zuglänge angewandt werden können.

Erfindungsgemäß wird die oben genannte Aufgabe gemäß Anspruch 1 dadurch gelöst.

Es ist das Verdienst der Erfinder, erkannt zu haben, daß durch einen erfindungsgemäßen Füllstoßverlauf ein und derselbe Füllstoß bzw. Füllstoßfunktion in der Füllstoßstellung des Führerbremsventiles zum Lösen der Bremse in die HL-Leitung eingeleitet werden kann, und zwar entgegen bisheriger Auffassung unabhängig von der Zuglänge.

In einer ersten Ausgestaltung der Erfindung erfolgt das Zuführen des Füllstoßes in der Füllstoßstellung manuell durch den Lokführer.

Alternativ hierzu kann vorgesehen sein, daß das Zuführen des Füllstoßes in der Füllstoßstellung automatisch erfolgt, beispielsweise mit Hilfes eines Tastschalters.

In einer vorteilhaften Ausgestaltung der Erfindung ist vorgesehen, daß der Füllstoßabbau in der ersten Phase mit dem doppelten HL-Bremsgradianten erfolgt. Dadurch kann die Luft noch weiter in die Hauptluftleitung (HL) einströmen und wird nicht vom Relaisventil abgeblasen. Ein Umsteuern des Relais vom Belüften zum Entlüften wird verhindert, was ein schädliches Unterschwingen des HL-Druckes beim Übergang in die nächste Abbauphase vermeidet.

Erfindungsgemäß ist es besonders vorteilhaft, wenn der Druckgradient in dem ersten Zeitintervall des Füllstoßabbaus einen Wert von 0,4 bar/s annimmt. Hierdurch kann ein Überladen der Bremsanlage, die beispielsweise bei einem Druckgradienten von 0,3 bar/s zu befürchten ist, verhindert werden. Unter dem Überladen der Bremsanlage versteht man gemäß Handbuch - Bremstechnische Begriffe und Werte -, dessen Offenbarungsgehalt vollumfänglich in die vorliegende Anmeldung mit eingeschlossen wird, eine bleibende Erhöhung des Druckes in den Steuerkammern oder Hilfsluftbehältern über den Regelbetriebsdruck von beispielsweise 5 bar hinaus.

Im Falle von steileren Gradienten als 0,45 bar/s, beispielsweise 0,5 bar/s oder mehr, ist andererseits das Füllstoßvolumen nicht ausreichend, um auch entfernte Wagen des Zuges mit einem Druckstoß zu versorgen. In einem solchen Fall muß mit Leistungseinbußen gerechnet werden.

Aus alledem ergibt sich als besonders vorteilhafter Wert ein Flankensteilheitswert im Druckabfall von 0,4 bar/s im ersten Zeitintervall des Füllstoßdruckabfalles.

Um ein Untersteuern des Druckes in der Hauptluftleitung zu verhindern, ist vorgesehen, in einem zweiten Zeitabschnitt den Druckgradienten des Druckabfalles abzusenken auf einen Wert, der geringer ist als der Wert des Druckgradienten des ersten Intervalles. Besonders bevorzugt wird in diesem zweiten Zeitabschnitt ein flacher Druckgradient von 0,05 bar/s.

Der Übergang vom Druckgradienten des ersten Zeitintervalles mit einem Wert von beispielsweise 0,4 bar/s zum flacheren Druckgradienten von beispielsweise 0,05 bar/s wird in der Regel bei einem Druckwert, der um 0,6 bis 1 bar über dem Regeldruck von beispielsweise 5 bar liegt, vorgenommen.

Der Druckwert im Endzeitpunkt der ersten Phase des Füllstoßabbaues, in dem der Übergang vorgenommen wird, hängt von der vorausgegangenen Bremsstufe ab und ist vorzugsweise proportional hierzu.

Die Höhe des Druckwertes im Endzeitpunkt der ersten Phase wurde in vorliegender Ausführungsform, ohne daß hierin eine Beschränkung zu sehen ist, für Vollbremsungen auf 6 bar und für eine Betriebsbremsung mit 0,5 bar unter Regeldruck von 5 bar, auf 5,6 bar festgelegt.

Die Druckhöhenwerte für andere Bremsstufen ergeben sich durch Interpolation zwischen diesen beiden Werten.

Um beim Füllstoß nach einer vorausgegangenen Vollbremsung eine Überladung zu vermeiden, wird der Druckverlauf spätestens nach einem vorgegebenen Zeitwert auf den Druckwert im Endzeitpunkt der ersten Phase reduziert. Bei Betriebsbremsungen reduziert sich der Druck und die Zeit bis zum Endzeitpunkt gegenüber einer Vollbremsung proportional zur Bremsstufe.

Um den weiteren Druckabbau nach Einleiten des Füllstoßes schnell, jedoch ohne Ansprechen der Steuerventile vornehmen zu können, ist mit Vorteil vorgesehen, in einem dritten Zeitabschnitt den Druckgradienten gegenüber dem zweiten Druckabschnitt erneut abzusenken, besonders bevorzugt auf einen Wert von 0,005 bar/s.

Die Zeitdauer des Füllstoßes bis zum Ende der Phase I beträgt bei Vollbremsung maximal 15 sec. während bei einem Füllstoß nach einer Betriebsbremsung mit 0,5 bar die Zeitdauer maximal 5 sec. beträgt. Bei dazwischen liegenden Bremsstufen wird die Zeitdauer nach einer mathematischen Funktion, vorzugsweise linear interpoliert.

Wird noch während des Füllstoßabbaus eine weitere Bremsung mit dem Führerbremsventil vorgenommen, so ist in einer weitergebildeten Ausführungsform der Erfindung mit Vorteil vorgesehen, dann den Füllstoßabbau besonders schnell bis HL = 5,2 bar vorzunehmen, wobei der Gradient in diesem Fall den Bremsgradienten um ein Mehrfaches übersteigt und danach mit dem Bremsgradienten von 0,25 bar/s weitergeführt wird.

Um ein besonders schnelles Lösen der Bremse zu erreichen, ist in einer vorteilhaften Ausführungsform der Erfindung vorgesehen, durch einen Querschnittwechsel die Selbsttätigkeit der Bremse vollständig zu umgehen und den Querschnittswechsel spätestens 40 sec. nach dem Ende des vorbestimmten zweiten Zeitintervalls zu schließen.

Der zeitliche Druckverlauf des Füllstoßes ist erfindungsgemäß derart ausgebildet, daß er unabhängig von der Zuglänge sämtliche Wagen mit einem Druckstoß versorgt und andererseits ein Überladen der Bremsanlage verhindert.

Um die Selbsttätigkeit der Bremse schnellstmöglich nach dem Füllstoß wiederherzustellen, ist mit Vorteil vorgesehen, den Querschnittswechsel spätestens 10 sec. nach dem Ende des Füllstoßabbaues in der zweiten Phase zu schließen.

Neben dem Verfahren stellt die Erfindung auch eine Vorrichtung gemäß dem unabhängigen Vorrichtungsanspruch zur Durchführung des erfindungsgemäßen Verfahrens zur Verfügung, die eine Führerbremseinrichtung mit mehreren Bremsstellungen und Füllstoßstellung, Mittel zum Erzeugen eines. Füllstoßes sowie eine Steuereinrichtung aufweist, wobei die Steuereinrichtung in der Füllstoßstellung des Führerbremsventiles die Mittel zum Erzeugen des Füllstoßes derart ansteuern, daß nach Einleiten eines Füllstoßes der Füllstoßabbau am Triebfahrzeug in vorgegebenen Zeitintervallen erfolgt. Vorteilhafterweise umfaßt die Vorrichtung Mittel zum Öffnen eines Querschnittwechsels, mit dem die Selbsttätigkeitsdüse der Bremse vollständig umgangen werden kann und der Querschnittwechsel spätestens 40 sec. nach dem Ende des vorbestimmten ersten Zeitintervalles geschlossen wird.

Besonders bevorzugt ist es, wenn die Mittel zum Erzeugen des Füllstoßes ein Proportionalventil umfassen, das von der Steuereinrichtung angesteuert wird, um die gewünschte Flankensteilheit des Druckgradienten zu erhalten.

Die Erfindung soll nachfolgend anhand der Zeichnungen beispielhaft beschrieben werden.

Es zeigen:
- Fig. 1: den Verlauf eines Füllstoßes ausgehend von einer Vollbremsung mit einem Ausgangsdruckwert von 3,5 bar;
- Fig. 2: einen Füllstoß zum Lösen der Bremse, ausgehend von einer Betriebsbremsung mit einem Ausgangsdruckwert von 4,5 bar.

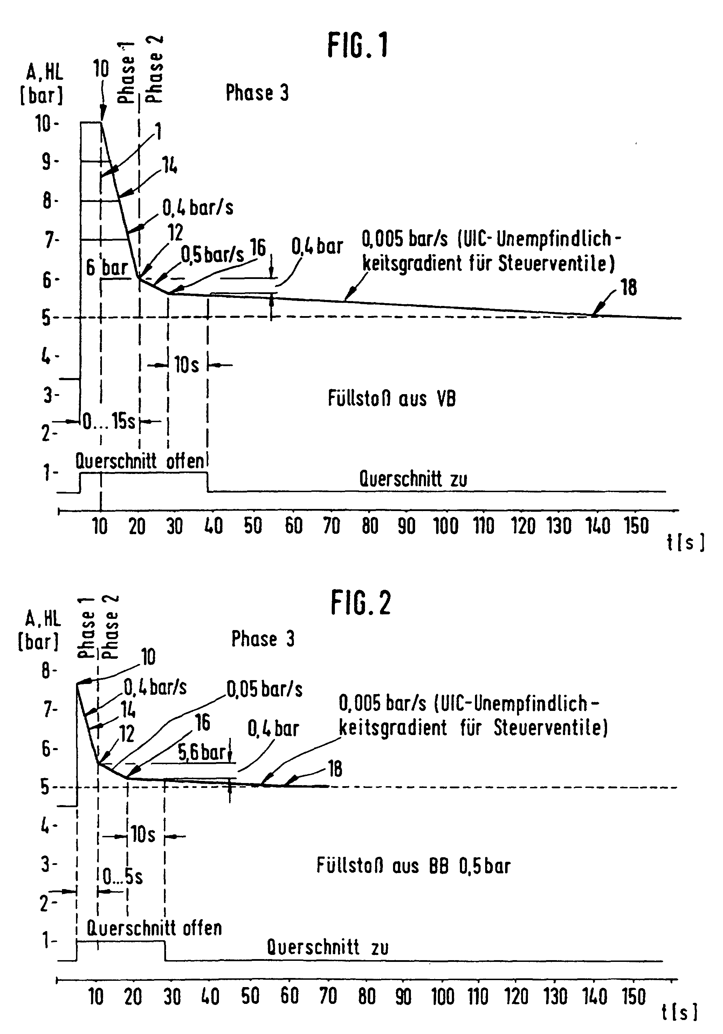

In Figur 1 ist das erfindungsgemäße zeitliche Steuersignal zur Erzeugung des Druckverlaufes in der Vorsteuerung A der Führerbremseinrichtung oder Hauptluftleitung HL des Triebfahrzeuges zum schnellen Lösen einer Betriebsbremse, ausgehend vom Zustand einer Vollbremsung mit Hilfe eines Füllstoßes 1 dargestellt. Nach der Vollbremsung beträgt der Luftdruck in der Hauptluftleitung nur noch 3,5 bar, liegt somit um 1,5 bar unter dem Regelbetriebsdruck von 5 bar. Der Luftdruck nach Bremsung von 3,5 bar zu Beginn des Einleiten des Druckstoßes ist mit Bezugsziffer 5 belegt. Zur Einleitung des erfindungsgemäßen Füllstoßes 1 in die Hauptluftleitung wird der Querschnittswechsel am Führerbremsventil vollständig geöffnet und in der Füllstellung desselben ein Füllstoß eingeleitet. Durch das vollständige Öffnen des Querschnittswechsel kann Luft sehr schnell in die Hauptluftleitung eingeführt und so ein optimales Lösen der Bremse erreicht werden.

Durch das Öffnen des Querschnittwechsels wird die Selbsttätigkeitsdüse, die eine Drossel im Relaisventil darstellt und die Selbsttätigkeit der Bremse z. B. bei Zugabriß umgangen, um die Selbsttätigkeit der Bremse nach Einleiten des Füllstoßes schnellstmöglich wieder herzustellen, ist mit Vorteil vorgesehen, daß das Schließen des Querschnittswechsels nach einem definierten Zeitintervall beziehungsweise einer Verzögerung nach dem Endzeitpunkt 16 der zweiten Phase erfolgt. Vorliegend beträgt das Intervall 10 Sekunden. Hierdurch wird ein schneller Druckanstieg in der Hauptluftleitung bewirkt. Der dargestellte Füllstoß erreicht zum Zeitpunkt t = 5 s am Triebfahrzeug einen Maximalwert von z. B. 10 bar. In dem vorliegend dargestellten Fall wird dieser Maximalwert über einen Zeitraum von 5 s aufrechterhalten. Die Druckstoßdauer bis zum eingezeichneten Zeitpunkt 10, ab dem der kontrollierte Füllstoßabbau beginnt, wird durch den Lokführer mit Hilfe des Führerbremsventils vorgegeben, wobei die maximale Zeitdauer des Druckstoßes durch die Führerbremsanlage beschränkt wird.

Wie aus Fig. 1 deutlich zu erkennen ergibt sich die Amplitude 6 des Füllstoßes rechnerisch aus dem Gradienten des Füllstoßabbaues der ersten Phase, d. h. der Flankensteilheit 14, die vordefiniert ist, sowie der Füllstoßdauer bis zum Endzeitpunkt 12 und den absoluten Druckwert im Endzeitpunkt 12, die beide abhängig von der vorausgegangenen Bremsstufe ist.

Der kontollierte Abbau des Füllstoßes beginnt in einer ersten Phase über einen ersten Zeitabschnitt mit einer vorbestimmten und gesteuerten bzw. geregelten ersten Flankensteilheit 14. In vorliegendem Fall wird in der ersten Phase bzw. dem ersten Zeitbereich ein Wert von vorzugsweise 0,4 bar/s für den Gradienten gewählt. Wie dargestellt, ist der Druckgradient, d. h. die Flankensteilheit 14, gemäß der Erfindung völlig unabhängig von der gewählten Bremsstufe und unabhängig von der Höhe des Füllstoßes, der beispielsweise 7, 8 oder 9 bar betragen kann. Durch den kontrollierten Abbau des Füllstoßes mit dem vorgegebenen Wert von vorzugsweise 0,4 bar/s wird garantiert, daß das Füllstoßvolumen ausreichend ist, um auch entfernte Wagen des Zuges mit einem Druckstoß zum Lösen der Bremsen zu versorgen. Andererseits wird aber auch ein Überladen der Bremsanlage verhindert. Die Steuerung der Flankensteilheit des Druckgradienten wird vorzugsweise elektronisch mit Hilfe einer Steuer- bzw. Regeleinrichtung vorgenommen, die in die Führerbremseinrichtung integriert sein kann. Zur Steuerung bzw. Regelung wird beispielsweise ein Proportionalventil entsprechend angesteuert.

Wie zuvor erwähnt ist der Gradient des Füllstoßabbaues von der vorausgegangenen Bremsstufe unabhängig, wohingegen der Zeitpunkt 12 bis zum Ende der ersten Phase abhängig von der vorausgegangenen Bremsstufe ist. In vorliegendem Fall beträgt die Zeitdauer des Füllstoßes ab Vollbremsung, d. h. ab Füllstoßbeginn 2 bis zum Endzeitpunkt der ersten Phase 12, 15 Sekunden und reduziert sich bei kleineren Bremsstufen vorzugsweise proportional zur Bremsstufe, beispielsweise auf 5 sec. bei einer Betriebsbremsung aus 0,5 bar wie in Fig. 2 gezeigt, d. h. der Druck 5 zu Beginn des Einleiten des Füllstoßes beträgt hier 4,5 bar. Wie desweiteren aus Fig. 1 zu erkennen, ist die Zeitdauer des Füllstoßes unabhängig von der Füllstoßhöhe, die beispielsweise 7, 8 oder 9 bar sein kann. Insbesondere ist die Zeit des Füllstoßes auch unabhängig vom Hauptluftbehälterdruck (HB-Druck).

Um ein Untersteuern der Relaisventile zu verhindern, ist vorgesehen, die Flankensteilheit des Druckgradienten in einer zweiten Phase, beginnend im Zeitpunkt 12 und endend im Zeitpunkt 16, weiter zu reduzieren, vorzugsweise, ohne daß hierin eine Beschränkung zu ersehen wäre, auf 0,05 bar/s. Ein Übergang von der ersten Phase zur zweiten Phase findet im Regelfall bei einem 0,6 - 1 bar über dem Regeldruck liegenden Druck statt. Ist der Druck in der zweiten Phase, wie dargestellt, um weitere 0,4 bar abgesunken, so wird in einer dritten Phase, beginnend im Zeitpunkt 16 und endend im Zeitpunkt 18 eine erneute Absenkung der Flankensteilheit des Druckgradienten auf einen Wert von beispielsweise 0,005 bar/s vorgenommen. Dieser Wert entspricht dem Unempfindlichkeitsgradienten für die Steuerventile und verhindert, daß durch den Füllstoßabfall diese einbremsen. Im Punkt 18 hat der Druck in der Hauptluftleitung wieder den Regeldruck, im vorliegenden Beispiel 5 bar, erreicht. Während der dritten Phase wird der Querschnittswechsel, in vorliegender Ausführungsform, 10 Sekunden nach deren Beginn geschlossen. Durch das erfindungsgemäß rasche Schließen des Querschnittswechsel wird gemäß UIC der Speisequerschnitt begrenzt, um einen Zugabriß und somit einen Druckabfall wiedererkennen zu können. In der Anfangsphase des Füllstoßes ist, wie dargestellt, die Querschnittsbegrenzung aufgehoben, da der Querschnittswechsel in die geöffnete Stellung verbracht wurde. Dies ermöglicht ein großquerschnittiges Einströmen von Luft in die Hauptluftleitung und so ein schnelles Befüllen.

Figur 2 zeigt den erfindungsgemäßen Füllstoßverlauf, wenn die Bremse nach einer Betriebsbremsung, bei der der Bremsdruck auf 4,5 bar in der Hauptluftleitung abgesenkt wurde, mit Hilfe eines Füllstoßes gelöst werden soll. Wie in Figur 2 zu erkennen, wird zunächst der Betriebsdruck mit Hilfe eines Fullstoßes auf 7,5 bar angehoben. Jedoch liegt dieser Druck nicht wie in Figur 1 über eine gewisse erste Zeitdauer an, sondern baut sich bereits nach Erreichen des Druckes von 7,5 bar sofort in der erfindungsgemäßen Weise mit einem Druckgradienten von 0,4 bar in der Zeit zwischen Punkt 10 und Punkt 12 ab. Der Füllstoßabbau erfolgt gemäß der Erfindung in der ersten Phase mit einem Gradienten von 0,4 bar/s. Hierdurch wird ermöglicht, daß trotz Füllstoßabbaus in der ersten Phase noch weiter Luft in die Hauptluftleitung hineinströmen kann. Die einströmende Luft unterstützt das Lösen der Bremsen und wird nicht vom Relaisventil abgeblasen. Durch den Druckgradienten von 0,4 bar/s wird ein Umsteuern des Relais von Belüften zu Entlüften verhindert und ein eventuell schädliches "Unterschwingen" des Hauptluftdrucks beim Übergang in die nächste Abbauphase vermieden.

Wie schon in Figur 1 ist bei Einleiten des Füllstoßes über das Führerbremsventil der Querschnittswechsel vollständig geöffnet. Nach Erreichen von Zeitpunkt 12 schließt sich bis zum Zeitpunkt 16 eine zweite Phase des Füllstoßabbaus an, der einen Druckgradienten von 0,05 bar/s aufweist. In vorliegendem Beispiel erfolgt die Umstellung vom Druckgradienten in der ersten Phase auf den Druckgradienten der zweiten Phase bei einem Betriebsdruck von 5,6 bar, d.h. einem um 0,6 bar gegenüber dem Regelbetriebsdruck von 5 bar in der Hauptluftleitung oder Bremsleitung erhöhten Druck. Die Überhöhung ist abhängig vom vorhergegangenen Bremsdruck der Bremsstufe, vorzugsweise proportional. Damit die Steuerventile nicht ansprechen, wird ab 5,2 bar der Füllstoßdruck mit einem Unempfindlichkeitsgradienten von 0,005 bar wie schon in Figur 1 bis zum Regelbetriebsdruck von 5 bar abgebaut. Wiederum wird in dem vorliegenden Ausführungsbeispiel 10 Sekunden nachdem das System in die dritte Phase übergegangen ist, der geöffnete Querschnittswechsel geschlossen, um nach Einleiten des Füllstoßes wiederum rasch die Selbsttätigkeit der Bremse sicherzustellen.

Mit der vorliegenden Erfindung wird somit erstmals ein Verfahren zum Lösen einer Bremse in einem UIC-Druckluftbremssystem vorzugsweise bei Schienenfahrzeugen angegeben, mit dem ein Lösen einer Betriebsbremse aus unterschiedlichen Bremszuständen unabhängig von der Zuglänge mit Hilfe eines einzigen Füllstoßes sichergestellt wird.

### Bezugszeichenliste:

- 1:: Füllstoß
- 5:: Betriebsdruck zum Beginn des Füllstoßes
- 6:: Amplitude des Füllstoßes
- 10:: Anfangszeitpunkt der ersten Phase des Füllstoßabbaus
- 12:: Endzeitpunkt der ersten Phase des Füllstoßabbaus
- 14:: Flankensteilheit des Füllstoßabbaus in der ersten Phase
- 16:: Endzeitpunkt der zweiten Phase des Füllstoßabbaus
- 18:: Endzeitpunkt der dritten Phase des Füllstoßabbaus

## Patentansprüche

1. Verfahren zum schnellen Lösen der Bremsen eines UIC-Druckluftbremssystems von Eisenbahnfahrzeugen mit Hilfe eines der Hauptluftleitung des Druckluftbremssystems zugeführten Füllstoßes, wobei ein Anfangs- und ein Endpunkt des Füllstoßes (Punkte 10 und 12) definiert werden,
deren zugeordnete Drücke abhängig von der vorangehenden Bremsstufe bestimmt werden,
wobei der Anfangspunkt maximal die Aussteuerung des Druckes der Hauptbremsleitung (HB) ergibt,
der dem Endpunkt zugeordnete Enddruck über einen Druckgradienten angefahren wird,
und das Anfahren des Ruhedruckes der Hauptluftleitung in der Folge höchstens mit dem UIC-Unempfindlichkeitsgradienten für Steuerventile erfolgt, und das Zuführen des Füllstoßes bei Wechsel der Führerbremseinrichtung aus einer Bremsstellung in eine Füllstoßstellung erfolgt, **dadurch gekennzeichnet, daß** als Druckgradient, mit dem der Enddruck angefahren wird, ein definierter Druckgradient Vorbestimmt wird, der unabhängig von der zuvor gewählten Bremsstufe und der Höhe des Füllstoßes ist.

2. Verfahren gemäß Anspruch 1, **dadurch gekennzeichnet, daß** das Zuführen des Füllstoßes in der Füllstoßstellung manuell durch den Lokführer erfolgt.

3. Verfahren gemäß Anspruch 1, **dadurch gekennzeichnet, daß** das Zuführen des Füllstoßes in der Füllstoßstellung automatisch erfolgt.

4. Verfahren gemäß Anspruch 3, **dadurch gekennzeichnet, daß** die automatische Zuführung des Füllstoßes nach einer vorbestimmten Zeit beendet wird.

5. Verfahren nach einem der Ansprüche 1 - 4, **dadurch gekennzeichnet, daß** der Füllstoßabbau in der ersten Phase mit dem doppelten HL-Bremsgradienten erfolgt.

6. Verfahren nach einem der Ansprüche 1 bis 5, **dadurch gekennzeichnet,daß** der Füllstoßabbau im ersten Zeitintervall mit einem Druckgradienten (14) von 0,35 bis 0,45 bar/s erfolgt.

7. Verfahren nach Anspruch 6, **dadurch gekennzeichnet, daß** der Füllstoßabbau in dem ersten Zeitintervall mit einem Druckgradienten von 0,4 bar/s erfolgt.

8. Verfahren nach einem der Ansprüche 1 bis 7, **dadurch gekennzeichnet, daß** die Länge des ersten vorbestimmten Zeitintervalles unabhängig vom Hauptluftbehälterdruck (HB-Druck) ist.

9. Verfahren nach einem der Ansprüche 1 bis 8, **dadurch gekennzeichnet, daß** der Füllstoßabbau mit einem zweiten Druckgradienten, der geringer als der erste Druckgradient ist, in einem vorbestimmten zweiten Zeitintervall erfolgt.

10. Verfahren nach Anspruch 9, **dadurch gekennzeichnet, daß** der Füllstoßabbau im zweiten Zeitintervall mit einem zweiten Druckgradienten von 0,05 bar/s erfolgt.

11. Verfahren gemäß einem der Ansprüche 1 - 10, **dadurch gekennzeichnet, daß** durch einen Querschnittswechsel die Selbsttätigkeitsdüse der Bremse vollständig umgangen wird und der Querschnittswechsel spätestens 40 sec. nach dem Ende des vorbestimmten zweiten Zeitintervalls geschlossen wird.

12. Verfahren gemäß Anspruch 11, **dadurch gekennzeichnet, daß** der Querschnittswechsel spätestens 10 sec. nach dem Ende des Füllstoßabbaues in der zweiten Phase geschlossen wird.

13. Verfahren nach einem der Ansprüche 1 bis 12, **dadurch gekennzeichnet, daß** der Füllstoßabbau in einem dritten Zeitintervall mit einem Unempfindlichkeitsgradienten erfolgt, dessen Wert geringer als der Wert des Druckgradienten des zweiten Intervalles ist.

14. Verfahren nach Anspruch 13 **dadurch gekennzeichnet, daß** der Füllstoßabbau in dem dritten Zeitintervall mit dem UIC-Umempfindlichkeitsgradienten für Steuerventile mit 0,005 bar/s erfolgt.

15. Verfahren nach einem der Ansprüche 1 bis 14, **dadurch gekennzeichnet, daß** der Füllstoßabbau unabhängig vom vorausgegangenen Aufbau des Füllstoβes stets mit den selben Druckgradienten erfolgt.

16. Verfahren nach einem der Ansprüche 1 bis 15, **dadurch gekennzeichnet, daß** der Füllstoßabbau bei Bremsungen in den Füllstoß mit einem Druckgradienten erfolgt, der größer als der Druckgradient des ersten Zeitintervalles ist.

17. Vorrichtung, umfassend:
eine Führerbremseinrichtung, wobei die Führerbremseinrichtung Bremsstellungen sowie mindestens eine Füllstoßstellung, Mittel zum Erzeugen eines Füllstoßes, sowie eine Steuereinrichtung aufweist, **dadurch gekennzeichnet, daß** in der Füllstoßstellung der Führerbremseinrichtung die Steuereinrichtung die Mittel zum Erzeugen des Füllstoßes derart ansteuert, daß nach Einleiten eines Füllstoßes der Füllstoßabbau am Triebfahrzeug bzw. Führerbremsventil in den vorgegebenen Zeitintervallen mit den vorgegebenen Druckgradienten gemäß dem Verfahren nach einem der Ansprüche 1 bis 16 erfolgt.

18. Vorrichtung nach Anspruch 17, **dadurch gekennzeichnet, daß** die Mittel zum Erzeugen des Füllstoßes ein steuerbares Proportionalventil umfassen.

19. Vorrichtung nach Anspruch 17 oder 18, **dadurch gekennzeichnet, daß** eine Einrichtung zum Einstellen eines Querschnittwechsels zur Umgehung der Selbsttätigkeitsdüse während des Füllstoßes vorgesehen ist.

## Claims

1. Method of rapidly releasing die brakes of a UIC compressed-air braking system of railway vehicles by means of a filling pressure surge supplied to the main brake pipe of the compressed-air braking system, wherein an initial point and an end-point of the filling pressure surge (points 10 and 12) are defined,
their associated pressures are determined independently of the preceding braking level,
with the initial point furnishing, at maximum, the modulation of the pressure in the main brake pipe (HB),
with the terminal pressure associated with the end-point being approached via a pressure gradient,
and wherein the approach towards the de-energised pressure in the main brake pipe is subsequently performed at maximum with the UIC dead-spot gradient for control valves while the filling pressure surge is supplied by the time of a change of the driver's brake means from a braking position into a filling pressure surge position,
**characterised in that** a defined pressure gradient is predetermined as pressure gradient by which the final pressure is approached, which is independent of the previously selected braking level and the magnitude of the filling pressure surge.

2. Method according to Claim 1, **characterised in that**
the supply of the filling pressure surge in the filling pressure surge position is performed manually by the engine driver.

3. Method according to Claim 1, **characterised in that**
the supply of the filling pressure surge in the filling pressure surge position is performed automatically.

4. Method according to Claim 3, **characterised in that**
the automatic supply of the filling pressure surge is terminated after a predetermined period.

5. Method according to any of the Claims 1 to 4, **characterised in that**
the filling pressure surge decrease takes place in the first phase with the double HL braking gradient.

6. Method according to any of the Claims 1 to 5, **characterised in that**
the filling pressure surge decrease takes place in the first time interval with a pressure gradient (14) from 0.35 to 0.45 bar/s.

7. Method according to Claim 6, **characterised in that**
the filling pressure surge decrease takes place in the first time interval with a pressure gradient of 0.4 bar/s.

8. Method according to any of the Claims 1 to 7, **characterised in that** the length of the first predetermined time interval is independent of the pressure in the main compressed-air reservoir (HB pressure).

9. Method according to any of the Claims 1 to 8, **characterised in that**
the filling pressure surge decrease takes place with a second pressure gradient that is slighter than the first pressure gradient, within a predetermined second time interval.

10. Method according to Claim 9, **characterised in that**
the filling pressure surge decrease in the second time interval takes place with a second pressure gradient of 0.05 bar/s.

11. Method according to any of the Claims 1 to 10, **characterised in that**
a change of the cross-sectional area is applied to circumvent the automatic-operation nozzle of the brake entirely and that the change of the cross-sectional area is completed at the latest 40 seconds after the end of said predetermined second time interval.

12. Method according to Claim 11, **characterised in that**
the change of the cross-sectional area is completed at the latest 10 seconds after the end of the filling pressure surge decrease in the second phase.

13. Method according to any of the Claims 1 to 12, **characterised in that**
the filling pressure surge decrease takes place in a third time interval with a dead-spot gradient whose magnitude is smaller than the magnitude of the pressure gradient of the second interval.

14. Method according to Claim 13, **characterised in that**
the filling pressure surge decrease takes place in a third time interval with the UIC dead-spot gradient for control valves at 0.005 bar/s.

15. Method according to any of the Claims 1 to 14, **characterised in that**
the filling pressure surge decrease takes place independently of the preceding generation of the filling pressure surge, permanently at the same pressure gradient.

16. Method according to any of the Claims 1 to 15, **characterised in that**
in the case of brake application, the filling pressure surge decrease takes place into the filling pressure surge at a pressure gradient that exceeds the pressure gradient of the first time interval.

17. Device comprising
a driver's brake means, wherein the driver's brake means comprises brake positions as well as at least one filling pressure surge position, means for generating a filling pressure surge as well as a control means, **characterised in that** with the driver's brake means being in the filling pressure surge position, said control means controls said means for generating the filling pressure surge in such a way that upon initiation of a filling pressure surge the filling pressure surge decrease on the traction unit or driver's brake valve, respectively, occurs within the predetermined time intervals with said predetermined pressure gradients in accordance with any of the Claims 1 to 16.

18. Device according to Claim 17, **characterised in that**
said means for generating the filling pressure surge comprise a controllable proportional valve.

19. Device according to Claim 17 or 18, **characterised in that**
a means for adjusting a change of the cross-sectional area is provided for bypassing the automatic-operation nozzle during the filling pressure surge.

## Revendications

1. Procédé à desserrer rapidement les freins d'un système de freinage pneumatique UIC aux véhicules de chemin de fer moyennant un à-coup de pression de remplissage alimenté à la conduite générale de frein du système de freinage pneumatique, dans lequel
un point de sortie et a point final de l'à-coup de pression de remplissage (points 10 et 12) sont définis,
leurs pressions affectées sont établies indépendamment du niveau de freinage précédant,
audit point de sortie fournissant, au maximum, la modulation de la pression dans la conduite générale de frein (HB),
à la pression finale affectée au point final étant rapprochée via un gradient de pression,
et dans lequel l'approche de la pression de repos dans la conduite générale de frein se fait ensuite au maximum au i gradient des points morts selon l'UIC pour des distributeurs, pendant que l'à-coup de pression de remplissage est alimenté au temps d'un changement du moyen de serrage du mécanicien d'une position de freinage en une position d'à-coup de pression de remplissage,
**caractérisé en ce qu'**un gradient défini est prédéterminé en tant que gradient de pression moyennant duquel se fait l'approche à la pression finale, qui est indépendante du niveau de freinage choisi d'abord et de la grandeur de l'à-coup de pression de remplissage.

2. Procédé selon la revendication 1, **caractérisé en ce**
**que** l'alimentation de l'à-coup de pression de remplissage dans la position d'à-coup de pression de remplissage est faite à la main par le conducteur de locomotive.

3. Procédé selon la revendication 1, **caractérisé en ce**
**que** l'alimentation de l'à-coup de pression de remplissage dans la position d'à-coup de pression de remplissage se fait de manière automatique.

4. Procédé selon la revendication 3, **caractérisé en ce**
**que** l'alimentation automatique de l'à-coup de pression de remplissage est finie après un intervalle prédéterminé.

5. Procédé selon une quelconque des revendications 1 à 4, **caractérisé en ce**
**que** la réduction de l'à-coup de pression de remplissage se fait dans la première phase au double gradient de freinage de la conduite principale.

6. Procédé selon une quelconque des revendications 1 à 5, **caractérisé en ce**
**que** la réduction de l'à-coup de pression de remplissage se fait dans le premier intervalle de temps à un gradient de pression (14) de 0,35 à 0,45 bar/s.

7. Procédé selon la revendication 6, **caractérisé en ce**
**que** la réduction de l'à-coup de pression de remplissage se fait dans le premier intervalle de temps à un gradient de pression de 0,4 bar/s.

8. Procédé selon une quelconque des revendications 1 à 7, **caractérisé en ce que** la durée du premier intervalle de temps prédéterminé est indépendante de la pression dans le réservoir principal d'air comprimé (pression HB).

9. Procédé selon une quelconque des revendications 1 à 8, **caractérisé en ce**
**que** la réduction de l'à-coup de pression de remplissage se fait à un deuxième gradient de pression, qui est plus petit que le premier gradient de pression, au-dedans d'un deuxième intervalle de temps prédéterminé.

10. Procédé selon la revendication 9, **caractérisé en ce**
**que** la réduction de l'à-coup de pression de remplissage dans le deuxième intervalle de temps se fait à un deuxième gradient de pression de 0,05 bar/s.

11. Procédé selon une quelconque des revendications 1 à 10, **caractérisé en ce**
**qu'**un changement de section droite est appliqué afin de contourner la tuyère du régime automatique du frein complètement, et en ce que le changement de section droite est fini, au plus tard, après la fin dudit deuxième intervalle de temps prédéterminé.

12. Procédé selon la revendication 11, **caractérisé en ce**
**que** le changement de section droite est fini, au plus tard, 10 secondes après la fin de la réduction de l'à-coup de pression de remplissage dans la deuxième phase.

13. Procédé selon une quelconque des revendications 1 à 12, **caractérisé en ce**
**que** la réduction de l'à-coup de pression de remplissage se fait dans un troisième intervalle de temps, à un gradient des points morts, dont la grandeur est plus petite que la grandeur du gradient de pression du deuxième intervalle.

14. Procédé selon la revendication 13, **caractérisé en ce**
**que** la réduction de l'à-coup de pression de remplissage se fait dans un troisième intervalle de temps, au gradient des points morts selon l'UIC pour des distributeurs, à 0,005 bar/s.

15. Procédé selon une quelconque des revendications 1 à 14, **caractérisé en ce**
**que** la réduction de l'à-coup de pression de remplissage se fait indépendamment de l'établissement précédant de l'à-coup de pression de remplissage, en permanence au même gradient de pression.

16. Procédé selon une quelconque des revendications 1 à 15, **caractérisé en ce**
**qu'**au cas de freinage, la réduction de l'à-coup de pression de remplissage se fait en l'à-coup de pression de remplissage à un gradient de pression, qui surpasse le gradient de pression du premier intervalle de temps.

17. Dispositif comprenant
un moyen de serrage du mécanicien, dans lequel le moyen de serrage du mécanicien comprend des positions de serrage ainsi qu'au moins une position d'à-coup de pression de remplissage, des moyens à engendrer un à-coup de pression de remplissage, ainsi qu'un moyen de commande, **caractérisé en ce qu'**au moyen de serrage du mécanicien se trouvant dans la position d'à-coup de pression de remplissage, ledit moyen de commande sert à commander ledit moyen à engendrer l'à-coup de pression de remplissage d'une telle manière, qu'après le déclenchement d'un à-coup de pression de remplissage, la réduction de l'à-coup de pression de remplissage au l'engin moteur ou respectivement au robinet du mécanicien, se fait au-dedans des intervalles de temps prédéterminés audit gradient de pressions prédéterminé selon une quelconque des revendications 1 à 16.

18. Dispositif selon la revendication 17, **caractérisé en ce**
**que** ledit moyen à engendrer l'à-coup de pression de remplissage comprend une soupape proportionnelle réglable.

19. Dispositif selon la revendication 17 ou 18, **caractérisé en ce**
**qu'**un moyen à ajuster un changement de section droite est disposé afin de contourner la tuyère du régime automatique au cours de l'à-coup de pression de remplissage.
